# EUROPÄISCHE PATENTANMELDUNG

(11) **EP 1 291 630 A1**
(43) Veröffentlichungstag der Anmeldung: **12.03.2003**
(21) Anmeldenummer: 02017702.8
(22) Anmeldetag: 07.08.2002
(51) Int. Cl.: G01K 11/28, F25D 29/00

(54) **Kühl-oder Gefriergerät**

(30) Priorität: 07.09.2001 DE 20114819 U
(71) Anmelder: LIEBHERR-HAUSGERÄTE GMBH, 88416 Ochsenhausen (DE)
(72) Erfinder: Ertel, Thomas, 88299 Leutkirch (DE)
(74) Vertreter: Gossel, Hans K., Dipl.-Ing.

(57) **Zusammenfassung**

Ein Kühl- oder Gefriergerät mit mindestens einem Lagerfach für Kühl- oder Gefriergut ist mit einem die Temperatur in dem Lagerfach messenden Thermometer versehen. Um bei einfachem und stabilem Aufbau eine hohe Anzeigegenauigkeit und einfache Ablesbarkeit des Thermometers bei hoher Trägheit zu erreichen, ist das Thermometer ein Galilei-Thermometer mit mindestens einem Schwebekörper. Die in einem transparentem Behälter eingeschlossene Flüssigkeit und die in dieser schwebende Kugel oder der Schwebekörper sind auf eine vorbestimmte Temperatur geeicht.

## Beschreibung

Die Erfindung betrifft ein Kühl- oder Gefriergerät mit mindestens einem Lagerfach für Kühl- oder Gefriergut, vorzugsweise ein Kühlgerät mit einem Normallagerfach und einem Kaltlagerfach mit vorbestimmter Temperatur, und mit einem die Temperatur in dem Lagerfach messenden Thermometer.

Viele Lebensmittel sind anfällig gegen Bakterienbefall, der nach einem Verzehr der Lebensmittel insbesondere bei anfälligen Menschen bis zum Tode führende Krankheiten auslösen kann. Bakterien dieser Art sind beispielsweise Listerien, die in der Umwelt weit verbreitet sind und deren Wachstum bei Temperaturen unter + 4°C vermindert ist. Es besteht daher ein Bedürfnis, in Kühlgeräten mindestens ein Lagerfach zu haben, in dem sich die Temperatur in einfacher und kostengünstiger Weise sicher in der Weise überwachen läßt, daß eine ein gefährliches Bakterienwachstum fördernde Temperatur mit Sicherheit angezeigt wird, so daß deren Überschreiten vermieden werden kann.

Einrichtungen zur Temperaturmessung und Anzeige sind in unterschiedlichen Ausführungsformen bekannt und im Einsatz. Übliche Temperaturanzeigeeinrichtungen bestehen aus elektronischen Thermometern, Glaskapillarthermometern, Bimetallthermometern oder Liquid Crystal Thermometern. Elektronische Thermometer bedingen nicht nur hohe Kosten, sie erfordern auch eine ständige Überwachung und Wartung wegen des Zustands der verwendeten Batterien, wenn sie nicht an das Netz angeschlossen sind, was jedoch einen zusätzlichen Aufwand bedeutet. Weiterhin ist eine hohe Genauigkeit elektronischer Thermometer nur durch einen erhöhten Schaltungsaufwand erreichbar.

Glaskapillarthermometer sind wegen ihrer filigranen Struktur zerstörungsanfällig. Ihre Skalenteilung ist nicht beliebig vergrößerbar und sie besitzen zudem ohne besondere zusätzliche Maßnahmen nicht die gewünschte Trägheit.

Bei Bimetall-Thermometern ist die Skalenteilung nicht beliebig vergrößerbar. Die gewünschte Trägheit der Temperaturanzeige muß durch zusätzliche Maßnahmen herbeigeführt werden.

Bei Liquid Crystal Thermometern ist die Ablesbarkeit nicht eindeutig. Weiterhin ist ihre Lebensdauer begrenzt, wobei die gewünschte Trägheit nur durch zusätzliche aufwendige Maßnahmen erreichbar ist.

Aufgabe der Erfindung ist es daher, ein kostengünstiges Thermometer für mindestens ein Lagerfach des eingangs angegebenen Kühl- oder Gefriergeräts zu schaffen, das sich bei einfachem und stabilem Aufbau durch eine hohe Anzeigegenauigkeit und einfache Ablesbarkeit auszeichnet.

Erfindungsgemäß wird diese Aufgabe dadurch gelöst, daß das Thermometer ein Galilei-Thermometer mit mindestens einem Schwebekörper ist und daß die in einem transparenten Behälter eingeschlossene Flüssigkeit und der in dieser schwebende Schwebekörper auf eine vorbestimmte Temperatur geeicht sind.

Ein Galilei-Thermometer besteht aus einem transparenten Behälter, beispielsweise einem zylindrischen Glasrohr, in dem eine geeignete Flüssigkeit eingeschlossen ist.

In der Flüssigkeit ist schwebend ein Körper, beispielsweise eine Glaskugel, angeordnet. Die Flüssigkeit ändert entsprechend der Umgebungstemperatur ihre Dichte. Die in der Flüssigkeit schwebende Kugel ist entsprechend der zu messenden Temperatur in der Weise auf die Flüssigkeit bzw. deren Dichte abgestimmt, daß die Kugel in der Flüssigkeit zwischen oberen und unteren Grenzen schwebt. Befindet sich die Kugel zwischen den angegebenen Grenzen, entspricht die Umgebungstemperatur der Temperatur, auf die das Galilei-Thermometer geeicht ist. Liegt die Temperatur höher, sinkt der Schwebekörper ab. Umgekehrt steigt der Schwebekörper bei sinkender Temperatur nach oben.

In dem Behälter können auch mehrere Kugeln oder Schwebekörper angeordnet sein, die auf unterschiedliche Temperaturen geeicht sind.

Zweckmäßigerweise besteht der Behälter aus einem transparenten geschlossenen Rohr, das mit Markierungen versehen ist, die die obere und untere Grenze anzeigen, innerhalb derer sich Schwebekörper zur Einhaltung der richtigen Temperatur befinden soll.

Das erfindungsgemäß verwendete Galilei-Thermometer weist die gewünschte Trägheit auf, da es die zu der jeweiligen Dichte gehörende Kerntemperatur der Trägerflüssigkeit in dem Behälter erfaßt, die sich so schnell und insbesondere auch nicht durch kurzzeitiges Öffnen der Kühlschranktür ändert. Darüber hinaus gewährleistet das Galilei-Thermometer eine eindeutige und schnelle Ablesbarkeit und die Lebensdauer des Thermometers ist unbegrenzt.

## Patentansprüche

1. Kühlgerät oder Gefriergerät mit mindestens einem Lagerfach für Kühl- oder Gefriergut, vorzugsweise Kühlgerät mit einem Normallagerfach und einem Kaltlagerfach mit vorbestimmter Temperatur, und mit einem die Temperatur in dem Lagerfach messenden Thermometer,
**dadurch gekennzeichnet,**
**daß** das Thermometer ein Galilei-Thermometer mit mindestens einem Schwebekörper, z.B. mit einer Kugel, ist und
**daß** die in einem transparenten Behälter eingeschlossene Flüssigkeit und die in dieser schwebende Kugel oder der Schwebekörper auf eine vorbestimmte Temperatur, beispielsweise 4° C, geeicht sind.

2. Kühlgerät nach Anspruch 1, **dadurch gekennzeichnet, daß** das Galilei-Thermometer in dem Kaltlagerfach und/oder dem Kühl- oder Gefrierfach angeordnet ist.

3. Kühlgerät nach Anspruch 1 oder 2, **dadurch gekennzeichnet, daß** der Behälter aus einem transparenten Rohr besteht, das mit die Solltemperatur einzeichnenden Markierungen versehen ist.
